# EUROPEAN PATENT SPECIFICATION

(11) **EP 1 211 875 B1**
(45) Date of publication and mention of the grant of the patent: **08.09.2004**
(21) Application number: 01305069.5
(22) Date of filing: 11.06.2001
(51) Int. Cl.: H04M 3/42, H04M 1/57

(54) **System and method for delivering profile information relating to a caller**
System und Verfahren zur Lieferung von Profilinformationen eines Anrufers
Système et méthode pour la délivrance d'information de profil concernant un appelant

(30) Priority: 01.12.2000 US 728011
(43) Date of publication of application: 05.06.2002
(73) Proprietor: LUCENT TECHNOLOGIES INC., Murray Hill, New Jersey 07974-0636 (US)
(72) Inventor: Bushnell, William Jackson, St. Charles, Illinois 60174 (US)
(74) Representative: Watts, Christopher Malcolm Kelway, Dr.

(56) References cited:
- EP-A- 0 843 489
- WO-A-98/05151
- US-A- 5 864 612
- US-A- 6 028 921

## Description

### FIELD OF THE INVENTION

This invention relates to telecommunication systems, and more particular to facilities within telecommunications systems for delivering to a called party information about a calling party.

### BACKGROUND OF THE INVENTION

Telecommunications customers have widely accepted several services that identify to a called subscriber certain limited information about the party or telephone line from which the call originated. For example, for calls received on conventional analog telephone lines, services available under the names "Calling Line Identification (CLID)", "Calling Number Identification (CNID)", and "Caller ID" identify the directory number of the telephone line or handset from which the call was placed. A related "Caller ID with Name" service identifies the directory number of the calling line or handset and a directory or billing name associated with the calling line or subscriber.

In order to provide these services, the switching office terminating the call transmits the identification information, in the form of voice-band Frequency-Shift Keying (FSK) signaling over the subscriber loop, to customer-premise equipment (CPE) which decodes the signals and displays the information. If the call originated in another switching system, the called number information is generally available to the terminating switching system from a signaling message used to set up the call. If the call originated in the terminating switching system, the called number information is generally available from a database in that switch. However, information other than the calling number which is to be delivered to the called subscriber must be requested by the terminating switch from an external database. In conventional telecommunications networks providing circuit-switched voice services, the transactions between the switch and the external database typically employ the "Common Channel Signaling System No. 7" (CCS7) signaling protocol. In networks employing the "Intelligent Network" model, the functional unit providing the external database service (among other services) is referred to as a Service Control Point (SCP).

Services are also available to provide limited caller identity information for calls to Integrated Services Digital Network (ISDN) lines, for calls to lines served as part of a group of business lines receiving a suite of business feature services (sometimes sold by network operators under the mark "CENTREX"), and for calls to private networks. These services and their underlying infrastructure are similar to the conventional analog-line services mentioned above, although the implementation details of delivery of the information to the called station or other display equipment, and mechanisms by which information is requested from a database, may vary.

Although the conventional caller identification services have achieved wide acceptance among service providers and telecommunications end users, the services in their current form have several limitations which restrict their utility. First, the services deliver limited quantities of information. Existing systems for delivering caller identification information have limited available capacity, and conventional display devices are adapted to display only limited amounts of information. Some services deliver only the directory number of the calling line. Other services also deliver a subscriber name associated with the calling line. This information may be useful, but additional information regarding the caller would be valuable in many cases, particularly to customers in large organizations who may frequently make and receive calls to and from callers with whom they are not acquainted.

Another limitation is that the services deliver the identity of the line or subscription from which a call is placed, rather than the identity of the caller. If the call is placed from a PBX or a line of a CENTREX group, conventional caller identification services typically provide the identity of the business or other subscriber organization, rather than the individual caller. Similarly, if a caller uses the telephone line or handset of another, e.g. when travelling, conventional caller identification services identify the premises from which the call is placed, or the owner of the handset, rather than the individual caller.

A further limitation, particularly from the caller's perspective, is that the same type of information, and the same information content, is delivered for each call. A caller may wish to provide (or omit to provide) different information depending on the purpose of a call. For example, a caller making a personal call from a business may not desire that the business be identified. Existing caller identification services usually allow a caller to block completely the delivery of their identifying information on a per-call basis, but do not allow the caller to elect to deliver some but not all information. In addition, the information delivered with a call is controlled and maintained by the telecommunications service provider, and generally cannot be edited or amplified by the caller.

US-A- 6 028 921 is directed to a method and system for use in conjunction with a calling name delivery service (e.g., caller ID) that permits a caller to select a short message to be delivered to a called party with the caller ID information.

US-A-5 864 612 is directed to a caller selective identification system whereby telephone subscribers can selectively choose caller ID information to be sent to a called party for display in conjunction with a call from the subscriber telephone.

WO-A-98/05151 describes a system whereby calling and called party subscribers having appropriately modified telephone equipment may exchange a Self-Identifying Outgoing Message ("SIOM") that identifies the calling subscriber to the called subscriber.

### Summary of the Invention

A system and method according to the invention are as set out in the independent claims. Preferred forms are set out in the dependent claims.

In a preferred embodiment constructed according to the present invention, a Caller Profile system and service are provided by which a caller may establish a caller profile which is to be selectably delivered to called parties contemporaneous with the delivery of a call. The caller profile may optionally be delivered at another time upon the caller's request. The caller profile may include text information, images, sound, or other multimedia content. The caller profile information may be stored in a database operated by a service provider, but may also be stored in a corporate or user-operated database However stored, the caller profile may be created and revised by the user, as needed, using a network terminal, such as a computer-based World Wide Web browsing system, or an interactive voice response system. Prior to making a call, the caller may select one of several profiles to be delivered with subsequent calls. When using a telecommunications service other than a service to which the caller normally subscribes-such as when making calls while traveling, visiting another office, or borrowing another subscriber's handset-the caller may request that the caller's own profile be delivered, rather than caller identification or profile information corresponding to the "borrowed" line, subscription, or handset.

In a first preferred embodiment constructed according to the present invention, and adapted for use in a circuit-based telecommunications network including Intelligent Network (IN) components, the Caller Profile Database Server (CPDS) function is performed by an IN Service Control Point (SCP). As is known, the SCP is connected to switching systems and other nodes having call processing functions using the CCS7 network. A Caller Profile Administrative Server (CPAS) is connected to the SCP and has connections to external networks, such as the Internet. The CPAS provides a user interface to enable subscribers to create and edit profiles, and select them for use. Updated profiles and selections are transferred to the CPDS/SCP, which stored the profiles and delivers them pursuant to requests from switches. An Interactive Voice Response (IVR) system is connected to the SCP and the telecommunications network and allows the caller to remotely enable caller profile delivery for calls made from a line, terminal, or handset other than those to which the caller subscribers.

In a second preferred embodiment constructed according to the present invention, and adapted for use in a packet-based telecommunications network, the CPDS function is performed by a network database server. Gateway/Feature servers provide functions equivalent to those of switching systems of circuit networks. The CPAS is connected to the CPDS and to a user-accessible network to enable subscribers to create and edit profiles, and select them for use, and to allow updated profiles and selections to be transferred to the CPDS. The IVR is connected to the CPDS and the telecommunications network and allows the caller to remotely enable caller profile delivery for calls made from a line, terminal, or handset other than those to which the caller subscribes.

### BRIEF DESCRIPTION OF THE DRAWINGS

These and other features of the invention will be best understood by reference to the following detailed description of a preferred embodiment of the invention, taken in conjunction with the accompanying drawings, in which:
Fig. 1 is a block diagram of a first preferred embodiment 100 of a caller profile system constructed in accord with the present invention and arranged for use with a circuit-based telecommunications system;
Fig. 2 is a block diagram of a second preferred embodiment 200 of a caller profile system constructed in accord with the present invention and arranged for use with a packet-based telecommunications system;
Fig. 3 is a block diagram showing a method for use with the preferred embodiments 100, 200 of Figs. 1-2 for creating, storing, and activating a caller profile for a subscriber;
Fig. 4 is a block diagram showing a method for use with the preferred embodiments 100, 200 of Figs. 1-2 for delivering caller profile information to a called party when the caller is using a line, service, or handset to which the caller subscribes;
Fig. 5 is a block diagram showing a method for use with the preferred embodiments 100, 200 of Figs. 1-2 for delivering caller profile information to a called party when the caller is using a line, service, or handset to which the caller does not subscribe; and
Fig. 6 is a block diagram showing a method for use with the preferred embodiments 100, 200 of Figs. 1-2 for activating the caller profile service in a remote mode to enable delivery of caller profile information to a called party when the caller is using a line, service, or handset to which the caller does not subscribe.

### DETAILED DESCRIPTION OF THE PREFERRED EMBODIMENTS

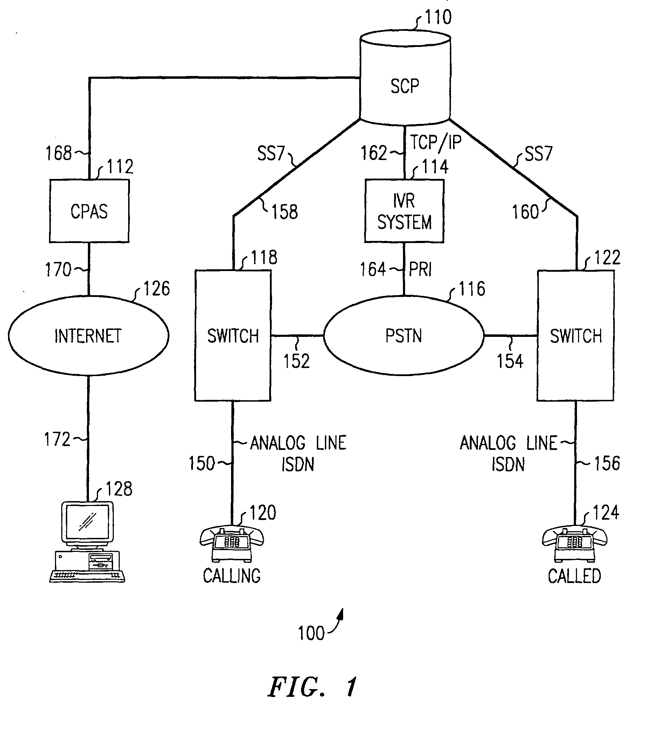

Fig. 1 is a block diagram of a first embodiment 100 of a caller profile system constructed in accord with the present invention and arranged for use with a circuit-based telecommunications system.

A telecommunications system constructed according to an aspect of the present invention may, in various embodiments, provide communications bearing voice signals, data, video, and any other content. Hereinafter, the term "call" is used herein to refer a session of information transfer between a set of subscriber terminals (or other endpoints) via a telecommunications system or network. The term "call" is intended to refer broadly to any type of call, service, connection, session, packet, or datagram, or any related group or stream thereof, regardless of media or content, and regardless of whether or not the communication is circuit, connection, or session oriented. Thus, the term "call" is intended to include, but not be limited to traditional circuit voice calls, packet voice calls, circuit data calls, connectionless calls, or packet data calls, and multimedia variants thereof.

The term "circuit" as applied to a call, network, or system refers to a mode of information transfer which occurs between defined endpoints over reserved network resources, and in which units of data are not individually addressed. Once a path or route is established for a circuit call, no further routing or addressing is required. It is recognized that some components carrying a circuit call may be implemented using packet- or cell-based technologies. The term "packet" as applied to a call, network, or system refers to a mode of information transfer in which a stream of information is divided into packets or units, and in which each packet or unit is individually addressed. A packet call does not necessarily reserve network resources.

The present application relates to telecommunications systems. It will be appreciated that in the telecommunications arts, various signal leads, busses, data paths, data structures, channels, buffers, and other communications paths may be used to implement a facility, structure, or method for conveying information or signals, and are often functionally equivalent. Accordingly, unless otherwise noted, references to apparatus or data structures for conveying a signal or information are intended to refer generally to all functionally equivalent apparatus and data structures.

As best seen in Fig. 1, the first embodiment 100 includes a calling subscriber terminal 120 coupled via a suitable line 150 to an originating switching system 118. Originating switching system 118 is connected via suitable trunks or carrier facilities 152 to a telecommunications network 116, such as the Public Switched Telecommunications Network (PSTN). A terminating switching system 122 is connected to network 116 via suitable trunks or carrier facilities 154. Terminating switch 122 is connected via a suitable line 156 to a called subscriber terminal 124. As is known in the art, switch 118, NETWORK 116, and switch 122 may cooperate to complete calls to and from the terminals 120 and 124. Although network 116 is shown and described herein as a public switched network, the general architecture of the first embodiment 100 is similarly applicable to private telecommunications networks.

Subscriber terminals 120 and 124 may be any suitable terminals adapted for use with switching systems 118 and 122, and with lines 150 and 156, respectively. For example, terminals 120 and 124 may be ordinary analog telephone sets, ISDN telephones, IP telephones, wireless handsets, telephony-enabled personal computers, and the like, with facilities to display a caller profile. The display facilities may be integrated with the terminals 120 and 124, or may be implemented as a separate caller profile display unit (not shown), which may be similar to existing Caller ID display units. Because caller profile information may be voluminous and include media other than text, a caller profile display unit may be equipped with display screen having greater capacity, improved resolution, and the capability to display images and present audio or other media. Many personal computers, electronic organizers, and similar devices have these capabilities and, if the computer or other device is not already telephony-enabled, it could be used as a display with a suitable connection to a telephone or other subscriber terminal. For example, many ISDN telephones have a data interface port which may be connected to a computer. Some display devices, such as personal computers, may be capable of displaying several caller profiles simultaneously, which may be advantageous during conference calls.

Lines 150 and 156 are intended to represent a compatible connection between terminals 120, 124 and switches 118, 122 without regard to the physical media or infrastructure used to implement the connection. Thus, lines 150 and 156 may be, for example, analog telephone lines, ISDN lines, appropriate resources of a wireless telecommunications system, and the like. In this instance, the term "line" is used with a meaning more expansive than that ordinarily applied in the telecommunications arts.

Switching systems 118 and 122 may be any suitable telephone switching systems. For example switching systems 118 and 122 may be distributed stored-program-controlled digital switches, such as the 5ESS® switching system, a product of Lucent Technologies Inc., 600 Mountain Avenue, Murray Hill, New Jersey, 07974-0636, and described in the AT&T Technical Journal, vol. 64, number 6, July/Aug. 1985, pages 1303-1564. Switches 118 and 122 may also be a distributed, stored-program-controlled, integrated services digital network (ISDN) electronic switching system such as the system disclosed in U. S. patent number 4,592,048, issued to M. W. Beckner, et al., on May 27, 1986. Other switching system implementations could also be used.

A Service Control Point (SCP) 110 is preferably connected to switch 118 via a link 158 and switch 122 via a link 160. The SCP 110, switches 118 and 122, links 158 and 160, form parts of an Intelligent Network, which may of the type described in AT&T Technical Journal, Summer, 1991, pp. 11-25, or similar thereto. The Intelligent Network architecture provides a cooperative, distributed network platform for delivering advanced telecommunications services. Links 158 and 160 are preferably CCS7 links, but other signaling or data links could also be used. Although links 158 and 160 are depicted as point-to-point links, they may also be implemented as connections through a packet-switched signaling network, as is known and practiced in the art.

SCP 110 provides database storage and retrieval functions to other network elements. In addition, SCP 110 also implements advanced services, by executing service logic programs in response to triggers and requests from other network elements, and by issuing instructions to other network elements. The other network elements may include switching systems and Service Nodes (SN), which can provide a variety of voice and signal processing services, and user interaction services, and service-circuit features.

In the first preferred embodiment 100, SCP 110 is used to maintain a database of caller profiles, and to deliver caller profiles to switches or other network elements for display to a called party, in conjunction with appropriate service logic, and in that role is referred to as the Caller Profile Database Server SCP (CPDS/SCP). Any suitable IN SCP may be used to implement CPDS/SCP 100. For example, CPDS/SCP 100 may be implemented using the Lucent Technologies Service Control Point, which is commercially available from Lucent Technologies Inc., 600 Mountain Avenue, Murray Hill, New Jersey, 07974-0636, or using the Enhanced Control Server (eCS), which is also commercially available from Lucent Technologies. Other SCP products could also be used.

The switching system 122 serving the called party is responsible, when calls arrive for a served called party, for: (1) determining whether the called party subscribes to the Caller-ID or Caller Profile services; (2) determining whether a caller profile is available and active for the calling party; (3) determining the capabilities of the customer-premise equipment (CPE), such as subscriber terminal 124 and the associated caller profile display facilities; (4) obtaining caller profile information from CPDS/SCP 110; and (4) delivering the caller profile information in an appropriate manner for the CPE. When a call arrives from a calling party for which a caller profile is available and active, an Intelligent Network trigger is activated within switching system 122, and the switching system launches a query to CPDS/SCP 110. The CPDS/SCP 110 returns appropriate caller profile information to the switch 122, which then delivers it to the called party user terminal 124. If high service demand occurs, links 158 and 160 between CPDS/SCP 110 and switches 118, 122 may be saturated by the large amount of information that may be contained in a caller profile. Accordingly, it may be desirable to use high-speed TCP/IP links for this traffic to avoid degrading the performance of the CCS7 network.

If the called subscriber terminal has limited display capability, switch 122 preferably transmits an abbreviated version of the caller profile, for example, by omitting images and other media, or by sending only predefined fields, selection of which may be controlled by system-wide defaults or by the caller profile subscriber.

Moreover, switch 122 preferably transmits the caller profile in a format and using a physical media path appropriate for the subscriber terminal and display. For example, for analog telephones, limited caller profile information may be transmitted using voice-band FSK over subscriber loop, as is now done for the Caller ID service. For ISDN telephones, more extensive caller profile information may be transmitted using any of several mechanisms: by transmitting the information in Q.931-style signaling messages over the D-channel; by transmitting the information using an X.25 packet-switched data path over the D-channel; or by placing a data call over the B- or D- channels. The information may be displayed on the ISDN telephone or on an associated display device. Although the Q.931 protocol, as currently standardized, may not support transport of the additional information contained in a caller profile, but one of skill in the art will understand how the protocol may be easily extended to support such additional information. For wireless handsets, caller profile information may be transmitted using existing messaging protocols, such as the Short Message Service, or using a data connection to the handset similar to that used to provide World-Wide Web browsing and other data services to wireless handsets.

For other devices, such as computers, the switch 122 may transmit caller profile data via a TCP/IP link or another appropriate higher capacity link. In some applications, particularly where caller profiles are extensive, and subscriber terminals are capable of displaying such extensive information, it may be preferable for the switch 122 to deliver only a pointer or locator for the actual caller profile information. In that case, the actual caller profile information may be stored on and delivered by a server separate from CPDS/SCP 110.

For example, switch 122 may deliver to appropriate terminals a URL (or other pointer or locator) which locates a subscriber's caller profile information stored on any web server accessible to the called party. Thus, the URL would be stored on the CPDS/SCP 110, while the caller profile information could be stored on a web server operated by the telecommunications service provider (on the Internet or on a private network) such as CPAS 112, or on a web server operated by another provider or the caller. Subscriber terminal 124 is preferably adapted to fetch and display the caller profile web page at the URL supplied by switch 122, either automatically or upon the request or permission of the terminal user. The service of providing different caller profile information depending on the called party, the time of day, or other distinguishing factors, could still be provided through CPDS/SCP 110 by delivering one of a set of different available caller profile URLs selected, e.g., according to rules established by the caller profile subscriber. Also, CPDS/SCP 110 and/or switch 122 may select for delivery an appropriate one of several available URLs depending upon the display capabilities of the subscriber terminal 124 or associated display unit.

As an alternative to delivering a URL, CPDS/SCP 110 could store the URL, and, each time caller profile information is required, fetch the referenced Caller Profile information and transmit it to switch 122 for delivery to the subscriber terminal. Optionally, CPDS/SCP 110 and/or switch 122 may translate the retrieved caller profile information from its stored representation into a form suitable for the display capabilities of the subscriber terminal 124 or associated display unit. For example, if the Caller Profile information is stored in HTML, and the subscriber terminal 124 is a wireless handset having a WAP- or HDML-compatible browser, the Caller Profile information may be translated into the appropriate WAP or HDML form before delivery to the handset.

In systems that rely on a URL or a similar pointer to identify the location of caller profile information which is stored in a standardized format (such as a World Wide Web page) and which may be administered and edited using ubiquitous tools, the caller profile subscriber may directly create and maintain the caller profile information.

As best seen in Fig. 1, a Caller Profile Administrative Server (CPAS) 112 is connected to CPDS/SCP 110 via link 168, and to a data-capable network 126, such as the Internet, via link 170. The CPAS 112 allows subscribers to create and edit their caller profiles, and to select rules for delivery of their profile to called parties. CPAS 112 preferably provides at least a remotely-accessible user interface by which subscribers may interact with the caller profile service. For example, CPAS may provide an interface in the form of a collection of World-Wide Web pages which subscribers may access using a web-browser-equipped computer 128 via link 172 and network 126.

During a user-accessed caller profile editing session, CPAS 112 may pass each profile creation, editing, and selecting transaction directly to CPDS/SCP 110 for immediate updating of the caller profile database. Alternatively, CPAS 112 may create a local copy of the caller profile records for the subscriber, locally perform the creation, editing, and selection transactions requested , and transmit the revised records to CPDS/SCP to replace the obsolete data. Links 170 and 172 may be any suitable data links, such as TCP/IP links. Other data links could also be used. Link 168 may be any suitable data link with which CPAS 112 and CPDS/SCP 110 are compatible. For example, link 168 may be a TCP/IP link or a CCS7 link.

As best seen in Fig. 1, an Interactive Voice Response (IVR) system 114 is preferably connected to SCP 110 via link 162 and to NETWORK 116 via link 164. According to an aspect of the invention, the IVR system 114 allows a caller profile subscriber to remotely control the selection and delivery of his or her profile, both from the subscriber's normal line, service, or handset, and from a "borrowed" line, service, or handset. Among other functions, the IVR system 114 preferably allows the subscriber to request that the subscribers profile be delivered with the next call made from a "borrowed" line, service, or handset.

IVR system 114 receives calls from NETWORK 116 and implements a voice-based dialog with a user to allow the user to request information, and to edit and select profiles for use. IVR system 114 preferably includes facilities, under control of predefined programs or scripts, to play speech messages and prompts to the user, and to receive input from the user in the form of speech and/or dialed digits. Responsive to user input, the IVR system 114 may update a locally stored database, or may generate database update transactions to be transmitted to SCP 110. IVR system 114 may be implemented using any suitable commercially available interactive voice response system. For example, the CONVERSANT Interactive Voice Response System, which is commercially available from Lucent Technologies Inc., 600 Mountain Avenue, Murray Hill, New Jersey, 07974-0636, may be used. Other voice response systems could also be used.

IVR system 114 could also be implemented using an intelligent network Service Node (SN), in conjunction with CPDS/SCP 110. A SN may provide voice prompt, digit collection, voice recognition, and other signal processing services, under control of an SCP. The logic, script, or program required to implement the desired user interface may be locally executed in the SN, or the SN may be used to provide individual voice processing services under the close direction of the CPDS/SCP. If IVR system 114 is implemented using a SN, any suitable commercially available SN product may be employed. For example, IVR system 114 may be implemented using one of the Intelligent Network service node products available from Lucent Technologies Inc. under the designations Lucent Technologies Service Node/Intelligent Peripheral or Lucent Technologies Compact Service Node/Intelligent Peripheral. Other SN products could also be used.

IVR system 114 receives calls from NETWORK 116 via link 164, which may be implemented using any suitable line, or trunk facility. Commercially-available IVR systems can typically support several simultaneous users. Accordingly, link 164 may be a trunk facility capable of supporting a plurality of voice paths, such as an ISDN Primary Rate Interface trunk facility. Commercially-available IVR systems may also support several simultaneous applications. Thus IVR system 114 may also be used to support other network applications in addition to supporting the function of remote subscriber access to caller profiles. Link 162, connecting the IVR system 114 to CPDS/SCP 110, may be any suitable data link with which both devices are compatible. For example, link 162 could be a TCP/IP link, or a CCS7 link.

In implementations where caller profile service is to be provided to a network employing subscriber terminals having advanced capabilities, the IVR 114 may be omitted, and the user interactions needed to administer a subscriber's caller profiles may be performed using the user-interface features of the terminals. For example, in a network of ISDN telephones having "soft keys" (keys or buttons which are not permanently bound to a specific terminal function), display message may be used to prompt the user to select options, an the like, using the telephone key pad and soft keys. The advanced subscriber terminal may also be used for interactions with CPAS 112, eliminating the need for the web-browser-equipped computer 128.

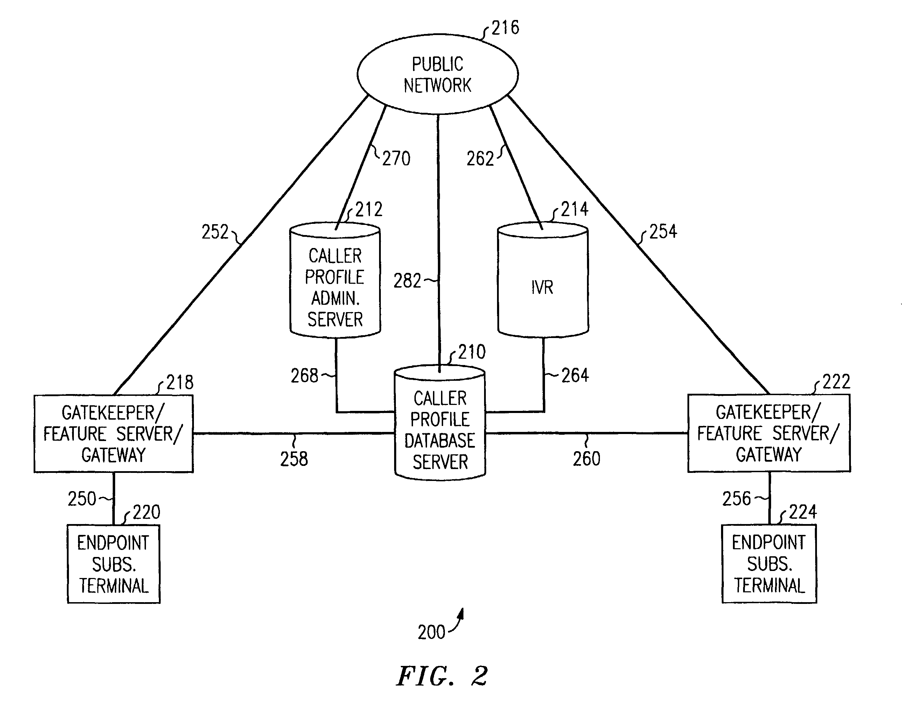

Fig. 2 is a block diagram of a second preferred embodiment 200 of a caller profile system constructed in accord with the present invention and arranged for use with a packet-based telecommunications system. The second embodiment 200 may be arranged in a manner generally similar to the first embodiment 100, with some modifications including the replacement of conventional circuit-switched network elements with other elements adapted to provide service in a packet network environment. Unless otherwise specified, a component of Fig. 2 may be considered to perform functions of identified corresponding components of Fig. 1.

As best seen in Fig. 2, the second preferred embodiment 200 of a caller profile system constructed in accord with the present invention comprises an originating Gatekeeper/Feature Server/Gateway system (GFSG) 218 and a terminating Gatekeeper/Feature Server/Gateway system (GFSG) 222. Originating GFSG 218 and terminating GFSG 222 may provide functions in packet networks similar to the functions of switching systems in circuit networks, including call authorization, call set-up, call teardown, call feature implementation, operations and maintenance, and interfaces to core networks, access networks, transmission networks and other networks. The "gateway" function refers to the conversion of elements of a telecommunications service from a first media, encoding type, signaling, or switching and transport technology (e.g., circuit, cell, or packet), to another. Heterogeneous networks employing uniform media, encoding type, signaling, and switching and transport technologies throughout may not require the gateway function.

A calling party subscriber terminal 220 is preferably connected via link 250 to the originating GFSG 218. The originating GFSG 218 is connected via a link 252 to a network 216, which may be a public packet network such as the Internet. Network 216 could also be a private packet network. Unless otherwise specified, all links shown in Fig. 2 may be implemented using any suitable packet- or cell-based networking technology, including TCP/IP, ATM, HDLC, and the like, and may be carried over any suitable media. It will be appreciated by one of skill in the art that networks or links characterized as "packet" based may incorporate circuit-based transmission and/or switching facilities. The terminating GFSG 222 is connected to network 216 via link 254. A called subscriber terminal 224 is connected to terminating GFSG 222 via link 256. Subscriber terminals 220 and 224 may be any suitable packet-telephony-enabled terminal, such as an IP telephone set or a personal computer with IP telephone software.

GFSG 218 and GFSG 222 may be implemented using any appropriate Gatekeeper, Feature Server, and Gateway elements, which may be realized as an integrated element, as individual elements, or any combination thereof. For example, GFSG 218 and GFSG 222 could be implemented using one of the telecommunications service delivery platforms which are commercially available from Lucent Technologies Inc., under the designations 5ESS® switching system or 7R/E Packet Solutions platform, in conjunction with an appropriate gateway element, such as one commercially available from AG Communication Systems, 2500 W. Utopia Road, Phoenix, AZ 85027-4129, under the designation AGCS iMerge Centrex Feature Gateway.

A Caller Profile Database Server (CPDS) 210 is connected to GFSG 218 via link 258, GFSG 222 via link 280, a Caller Profile Administrative Server (CPDS) 212 via link 268, and network 216 via link 282. The CPDS 210 provides functions similar to those of the CPDS/SCP 110 of the first embodiment 100. Terminating GFSG 222 preferably includes a trigger facility which is activated when a call arrives at the terminating GFSG from a calling party for which a caller profile is available and active. In response to the activated trigger, the GFSG launches a query to CPDS 210 for the caller profile information. The CPDS 210 returns the caller profile information to the terminating GFSG 222, which delivers it for display to subscriber terminal 224, or to a separate display device (not shown). Most subscriber terminals capable of use in packet networks are equipped with versatile displays that may advantageously used to display caller profile information. Accordingly, in most cases, a separate caller profile display will not be required. Any suitable server computer having database capabilities may be used to implement CPDS 210. For example, CPDS 210 may be implemented using one of an Intelligent Network switching control point product available from Lucent Technologies Inc. under the designation Lucent Technologies Switching Control Point. Other SCP products could also be used, as could commercially available database server computers equipped with appropriate network interfaces.

CPAS 212 provides functions similar to those provided by CPAS 112. CPAS 212 is preferably connected to network 216 via link 270, and CPDS 210 via link 268. CPAS 212 provides a subscriber-accessible interface for creating, editing, and selecting the subscriber's caller profiles. CPAS 212 may provide a Worid-Wide Web interface, or any other suitable user interface. Likewise, CPAS 212 may be accessed by any suitable computer or terminal device compatible with the user interface. During a user-accessed caller profile editing session, CPAS 212 may pass each profile creation, editing, and selecting transaction directly to CPDS 210 for immediate updating of the caller profile database. Alternatively, CPAS 212 may create a local copy of the caller profile records for the subscriber, locally perform the creation, editing, and selection transactions requested , and transmit the revised records to the CPDS 210 to replace the obsolete data. Any suitable server computer having database capabilities may be used to implement CPAS 212. For example, CPAS 212 may be implemented using one of the Intelligent Network service node products available from Lucent Technologies Inc. under the designations Lucent Technologies Service Node/Intelligent Peripheral or Lucent Technologies Compact Service Node/Intelligent Peripheral. However, other service node products, and other server/database computers, could also be used. As a non-limiting example, in an embodiment in which network 216 is a public data network, and subscriber terminals 220 and 224 are implemented using equipment having database capabilities, as could be the case with PC-based packet telephones, the functions of CPDS 210 and CPAS 212 may be integrated as a part of the subscriber terminals. The calling subscriber terminals would deliver caller profile information to respectively attached GFSGs, which would forward the caller profile information to the called subscriber terminal or to the GFSG serving the called subscriber terminal. In such an embodiment, all of the CPAS and CPDS functions may be distributed among the subscriber terminals, and thus there may be no centralized equipment to provide the CPDS and CPAS functions. As an alternative, suitably equipped subscriber terminals could provide CPDS and CPAS functions, while centralized CPDS and CPAS equipment would provide those functions for subscriber terminals lacking those capabilities.

As best seen in Fig. 2, an Interactive Voice Response (IVR) system 214 is preferably connected to CPDS 210 via link 262 and to network 216 via link 264. The IVR 214 provides functions similar to those of IVR 114 of first embodiment 110. According to an aspect of the invention, the IVR system 214 allows a caller profile subscriber to remotely control the selection and delivery of his or her profile, both from the subscriber's normal line, service, or handset, and from a "borrowed" line, service, or handset. IVR system 214 receives calls from network 216 via link 264. Among other functions, the IVR system 214 preferably allows the subscriber to request that the subscribers profile be delivered with the next call made from a "borrowed" line, service, or handset. IVR system 214 receives calls from NETWORK 216 and implements a voice-based dialog with a user to allow the user to request information, and to edit and select profiles for use. Link 262 connects the IVR system 214 to CPDS 210, enabling the CPDS 210 database to reflect changes requested by caller profile subscribers.

IVR system 214 may be implemented using any suitable commercially available interactive voice response system. For example, the CONVERSANT Interactive Voice Response System, which is commercially available from Lucent Technologies Inc., 600 Mountain Avenue, Murray Hill, New Jersey, 07974-0636, may be used. Other voice response systems could also be used, including an intelligent network Service Node (SN), in conjunction with CPDS 210, or a general-purpose server computer having installed therein suitable voice processing software.

In implementations where caller profile service is to be provided to a network employing subscriber terminals having advanced capabilities, the IVR 214 may be omitted, and the user interactions needed to administer a subscriber's caller profiles may be performed using the user-interface features of the terminals.

As shown in Figs. 1 and 2, switch 118 and GFSG 218, and called or terminating switch 122 and GFSG 222 all occupy the positions of telecommunications switching systems in currently envisioned network architectures. However, for the purposes of embodiments 100, 200 of a caller profile system constructed according to the present invention, it is the call origination, call termination, and call feature server functions of these elements that are of greatest interest. Future network architectures may decouple these functions from other traditional telecommunications switching functions. Accordingly, elements 118, 122, 218, and 222 may be referred to herein alternatively as telecommunications switching systems or call processor elements, whether or not they actually contain or directly control a switching or routing fabric.

Although first and second embodiments 100 and 200 are described in terms of circuit and packet paradigms, respectively, one of skill in the art will appreciate that commercial networks may be constructed in a hybrid fashion, incorporating elements of each paradigm with appropriate gateways or interworking facilities to enable these elements to work together compatibly. Moreover, networks may be constructed as overlays of one technology over the other, and such overlaid systems may actually be implemented using elements and components in common. Thus, as implemented in practice, a single component or element may perform selected functions of embodiments 100, 200, and multiple components, elements, and functions may be integrated into a single unit. By way of example, but not limitation, a single SCP could serve as both the CPDS/SCP 110 of a circuit network and the CPDS 210 of a packet network. For another example, although CPDS 210 and CPAS 212 are shown and described as distinct elements, they could be implemented as multiple functions of a single server computer, or the like.

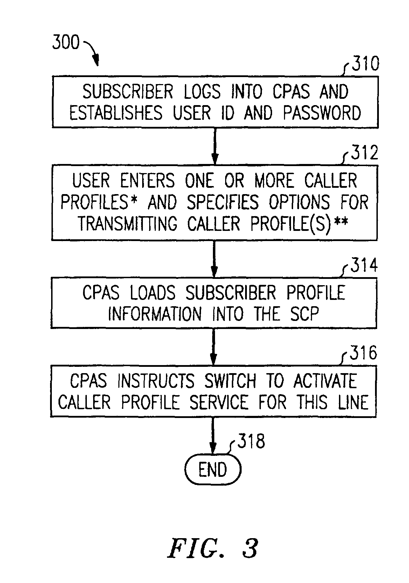

Fig. 3 is a block diagram showing a method for use with the preferred embodiments 100, 200 of Figs. 1-2 for creating, storing, and activating a caller profile for a subscriber. The method is useable after the subscriber has arranged for the service with the service provider, and any service provider business-office and provisioning steps have been completed. In current practice, features to be provided by switches 118, 122, and GFSGs 218, 222, including the call triggers or equivalent mechanisms used to invoke the specialized call processing associated with the Caller Profile service, are activated on a subscriber's line through "recent change" commands or equivalent means of modifying subscriber related data. The commands may be directly entered by a craftsperson at a control terminal of the switch 118, 122 or GFSG 218, 222, but are often supplied instead via a remote administration data link from a service order processing and provisioning system of a service provider. A similar remote administration data link may be provided to the CPAS 112, 212. When a subscriber requests a new service, the service provider's business-office personnel would enter a service order into the service order processing system. The service order processing system examines the type of service being requested and the subscriber's location and responsively issues updates to the CPAS to establish an account for the subscriber. In addition the service order processing system would determine which switch or GFSG serves the subscriber and it would generate the recent change commands that are used by the switch to update the service profile stored in the switch or GFSG for that subscriber's line. The service profile identifies which features and triggers are active for the subscriber's line. An Intelligent Network "Dialed Number" trigger, which is invoked on the completion of dialing, is preferably activated for the subscriber's line, in order to provide the Caller Profile service.

The method starts in step 310, in which the subscriber logs into the CPAS 112, 212, and establishes a user identification code and password. Alternatively, a user identification code and/or password may be assigned to the user by the service provider, and such assignment may occur as an automatic step in the service provisioning process. If a user identification code and password have already been assigned, the subscriber need only log in or otherwise authentically establish the subscriber's identity to the CPAS 112, 212. If the subscriber accesses the CPAS 112, 212 using a subscriber terminal from which subscriber identity can reliably be determined, such as certain types of wireless handsets, the CPAS 112, 212 may optionally accept the opening of a connection or session to the CPAS without requiring further authentication.

The CPAS 112, 212, preferably provides an externally accessible interface for use by the subscriber in logging in, establishing the user identification and password, and for other interactions needed to administer the subscriber's caller profiles. For example, the interface may be presented as a hyperlinked collection of World Wide Web pages which the subscriber may access using a web-browser-equipped computer 128 via link 172 and network 126 (Fig. 1), or using a data-capable subscriber terminal, such as 220 or 224 (Fig. 2). Other interfaces could also be used. For example, CPAS 112, 212 could provide an alternate interface via IVR system 114 or 214, which the subscriber may access using any subscriber terminal.

In step 312, the user enters one or more caller profiles which may be delivered to other subscriber. The CPAS may prompt the user for caller profile information according to a script or template. The CPAS may also accept free-form caller profile information, and/or URLs or other pointers or locators specifying one or more locations from which the caller profile information is to be retrieved. According to an aspect of the present invention, the user may also specify policy options or rules defining conditions under which caller profiles will be transmitted, depending on the time of day, a classification of the called party or called number, or other characteristics. By way of example, but not limitation, the user may specify that a first profile be transmitted when calling a number within the subscriber's company or organization, and a second profile (or no profile) be transmitted when calling an outside number. By way of another example, the user may specify that an abbreviated profile be transmitted when calling a number in the subscriber's personal directly or speed-dial list, and a full profile be transmitted when calling other numbers. Other distinguishing characteristics could also be used. Further, in this step, the subscriber may specify that upon the origination of certain calls, the subscriber is to be prompted to select the caller profile to be delivered to called party. The rules determining for which calls the subscriber will be prompted may depend on various characteristics of the time of day, called party, called number, and the like.

Once the user completes the task of administering Caller Profiles, the method continues in step 314, in which the CPAS 112, 212 loads the subscriber' profile information into CPDS/SCP 110 or CPDS 210. The profile information may include both data, representing the caller profiles themselves, and instructions, such as service logic steps, which may be used to implement the subscriber's chosen policy options or rules governing selective delivery of the subscriber's profiles. In step 316, which is optional, the CPAS 112, 212 may inform switch 122 or GFSG 222 that a caller profile has been established for the for the subscriber's line, subscription, or handset. This information may be used by the switch 122 or GFSG 222 to activate the "Dialed Number" Intelligent Network trigger for the line, or and equivalent mechanism, in the switch, which is invoked when the subscriber later originates a call. However, the activation may also occur at an earlier stage at the time the Caller Profile service is provisioned. The method ends at step 318.

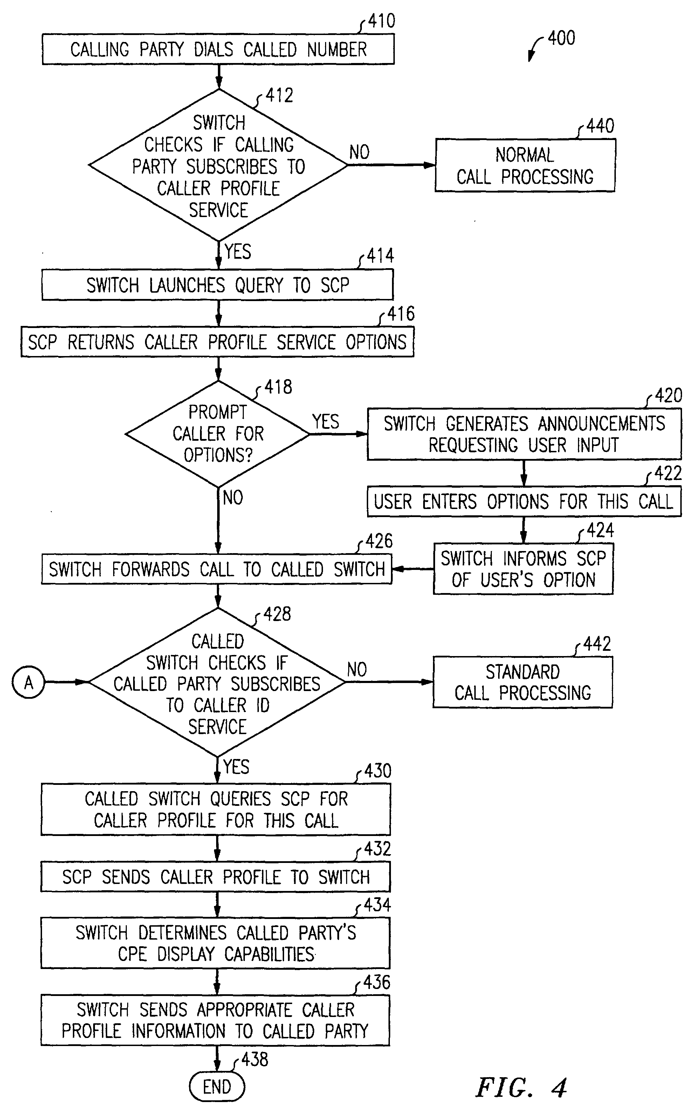

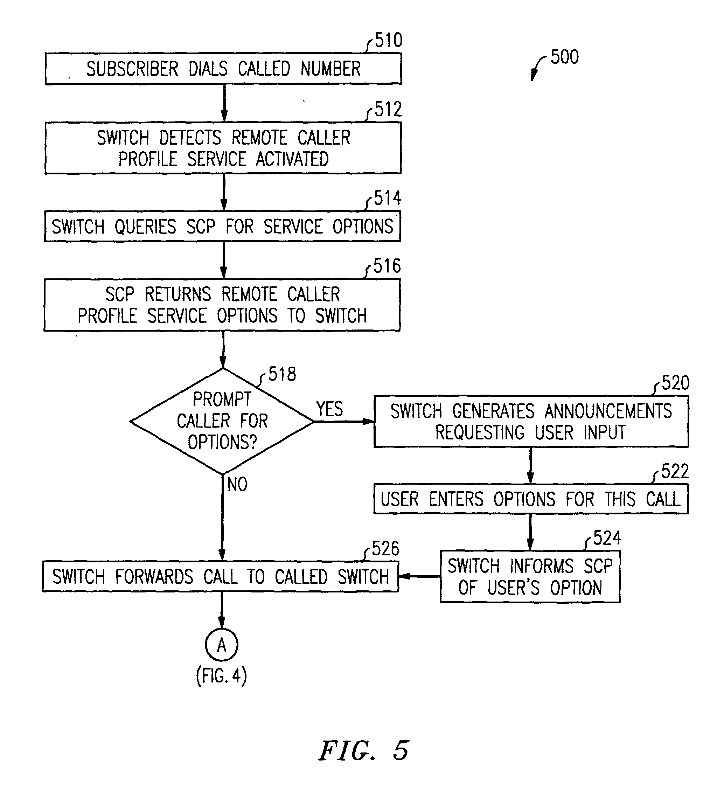

Fig. 4 is a block diagram showing a method 400 for use with the preferred embodiments 100, 200 of Figs. 1-2 for delivering caller profile information to a called party when the caller is using a line, service, or handset to which the caller subscribes. The method begins in step 410, in which the Caller Profile service subscriber originates a call, e.g., by dialing a called number, or by taking such other action as would be appropriate for the subscriber terminals and network in use. In step 412, the switch 118 or GFSG 218 determines whether the calling party (i.e., the subscriber) subscribes to the Caller Profile service. If the calling party does subscribe, the method continues in step 414. If the calling party does not subscribe, the method continues in step 440, in which subsequent handling of the call follows normal call processing procedures. The determination of step 412 may occur via an Intelligent Network "Dialed Number" trigger, which "fires" or is invoked when the subscriber has completed dialing a number.

In step 414, the switch 118 or GFSG 218 launches a query to CPDS/SCP 110 or CPDS 210 for information regarding Caller Profile Service options governing the subscriber's caller profile. The query preferably includes the dialed number, so that the CPDS/SCP 110 or CPDS 210 may use that information to select for delivery, or offer for such selection, different caller profile information based on the dialed number (or possibly other factors). In step 416, the CPDS/SCP 110 or CPDS 210 returns the Caller Profile Service options. In step 416, the switch 118 or GFSG 218 determines whether the Service options require that the subscriber be prompted to choose a caller profile (or no caller profile) to be delivered with the call. If the Service options do not require the subscriber to be prompted, the method continues in step 426.

However, if the Service options require the subscriber to be prompted, the method continues in step 420, in which the switch 118 or GFSG 218 generates announcements requesting user input. In step 422, the subscriber enters a selection of a caller profile (or no profile) to be delivered with this call and the switch 118 or GFSG 218 receives this selection. In step 424, the switch 118 or GFSG 218 informs the CPDS/SCP 110 or CPDS 210 of the option selected by the subscriber. The method then continues in step 426.

In step 426, switch 118 or GFSG 218 extends the call to the called or terminating switch 122 or GFSG 222. In step 428, the called or terminating switch 122 or GFSG 222 determines whether the called party subscribes to Caller-ID service. If the calling party does subscribe, the method continues in step 430. If the calling party does not subscribe, the method continues in step 442, in which subsequent handling of the call follows normal call processing procedures.

In step 430, the called or terminating switch 122 or GFSG 222 queries the CPDS/SCP 110 or CPDS 210 for the caller profile information for the call. In step 432, the CPDS/SCP 110 or CPDS 210 transmits the caller profile information to the called or terminating switch 122 or GFSG 222. In step 434, the called or terminating switch 122 or GFSG 222 determines the display capabilities of the called subscriber terminal 124, 224. In step 436, the called or terminating switch 122 or GFSG 222 selects the appropriate caller profile information and transmits it to the calling party. The selection step may include an evaluation of user-specified policy options or rules defining conditions under which caller profiles will be selected and transmitted, and this process may involve the cooperation of CPDS/SCP 110 or CPDS 210. The method ends in step 438. During a call, the method 410 could be activated by the subscriber, for example, by entering an appropriate feature code or requesting a transaction via a WWW terminal, to cause the caller profile to be delivered to the called subscriber terminal 124, 224 at a time other than the beginning of a call.

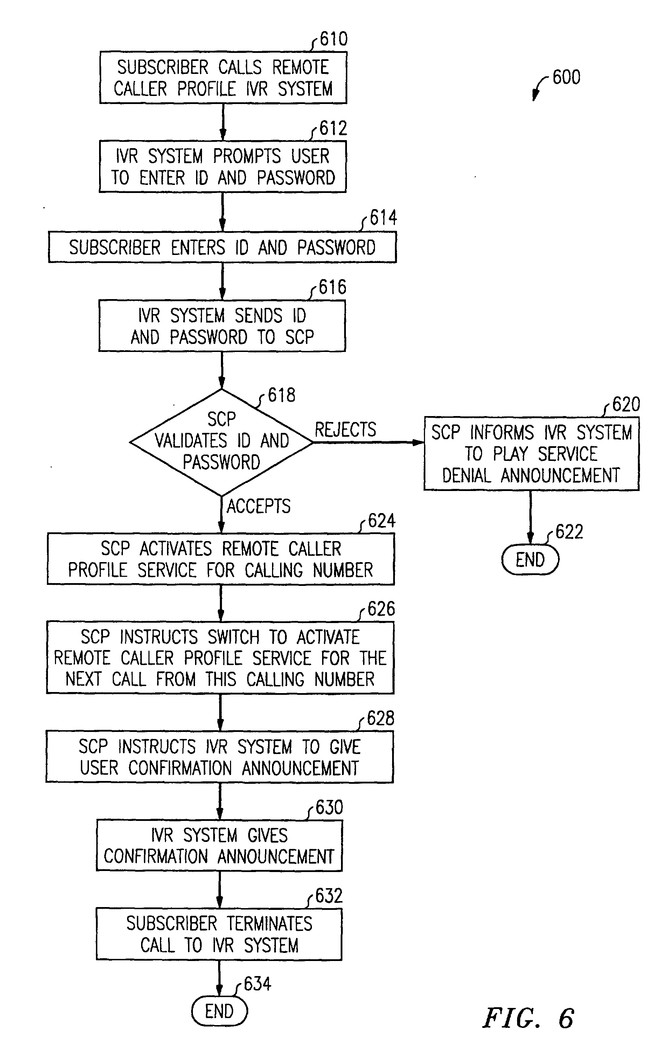

Fig. 5 is a block diagram showing a method 500 for use with the preferred embodiments 100, 200 of Figs. 1-2 for delivering caller profile information to a called party when the caller is using a line, service, or handset to which the caller does not subscribe, such as when visiting another location or borrowing another subscriber's handset. The line, service, or handset which is to be used, and to which the caller does not subscribe, is referred to herein as the "remote" line, service, or handset. The service of delivering a caller profile to a called party when the calling party is using a remote line, service, or handset, is referred to herein as the Remote Caller Profile service. In order to use the Remote Caller Profile service, the subscriber must first activate the service from the remote line or handset, for example, using method 600 of Fig. 6 (discussed further below).

Method 500 begins in step 510 in which the subscriber dials the called number from a remote line, service, or handset. In step 512, the switch or GFSG from which the call is originated determines that the Remote Caller Profile service has been activated for the remote line. In step 514, the switch launches a query to CPDS/SCP 110 or CPDS 210 for information regarding Caller Profile Service options governing the subscriber's caller profile. In step 516, the CPDS/SCP 110 or CPDS 210 returns the Caller Profile Service options. In step 518, the switch or GFSG determines whether the Service options require that the subscriber be prompted to choose a caller profile (or no caller profile) to be delivered with the call. If the Service options do not require the subscriber to be prompted, the method continues in step 526.

However, if the Service options require the subscriber to be prompted, the method continues in step 520, in which the switch or GFSG generates announcements requesting user input. In step 522, the subscriber enters a selection of a caller profile (or no profile) to be delivered with this call and the switch or GFSG receives this selection. In step 524, the switch or GFSG informs the CPDS/SCP 110 or CPDS 210 of the option selected by the subscriber. The method then continues in step 526.

In step 526, the switch or GFSG extends the call to the called or terminating switch 122 or GFSG 222. Thereafter, the call may be processed in accord with steps 428-438 and 440 of Fig. 4. Accordingly, the method continues with step 428.

Fig. 6 is a block diagram showing a method 600 for use with the preferred embodiments 100, 200 of Figs. 1-2 for activating the caller profile service in a remote mode to enable delivery of caller profile information to a called party when the caller is using a remote line, service, or handset to which the caller does not subscribe. The method starts in step 610, in which the subscriber places a call to the caller profile IVR system 114, 214 in order to administer the Remote Caller Profile service. In accord with an aspect of the present invention, the Remote Caller Profile service may alternatively be administered via an interactive data session established between a subscriber terminal and the CPAS 112, 212. For example, the CPAS 112, 212 may provide a World-Wide Web based interface for administering the Remote Caller Profile service in a manner similar to the interface described for administering the non-remote Caller Profile service. One of skill in the art will understand how to modify step 610 and subsequent steps for operation in the context of an alternate user interface.

In step 612, the IVR system prompts the subscriber to enter a user identification code and password. If an alternate interface is used, the user is prompted for a user identification code and password in a manner appropriate for that interface. If a subscriber terminal capable of reliably identifying itself or the subscriber (such as certain wireless handsets) is being used, the user authentication steps may be avoided. In step 614, the subscriber enters the identification code and password. In step 616, the IVR system transmits the user identification code and password to CPDSISCP 110 or CPDS 210. In step 618, the CPDS/SCP 110 or CPDS 210 determines whether the user identification code and password are valid. If the user identification code and password are valid, the method continues in step 624. However, if the user identification code and password are not valid, then the method continues in step 620, in which the CPDS/SCP 110 or CPDS 210 informs the IVR 114, 214 to play an announcement that the requested service will be denied. If an alternate interface is being used for administration, elements of that interface are instructed to report the service denial. Then the method ends in step 622.

If in step 618 the user identification and password were determined to be valid, then in step 624, the CPDS/SCP 110 or CPDS 210 activates the Remote Caller Profile service for the calling line, service, or handset. In step 626, the CPDS/SCP 110 or CPDS 210 instructs the switch serving the remote line, service, or handset to activate the Remote Caller Profile service for the next call from the calling line, service, or handset. In step 628, the CPDS/SCP 110 or CPDS 210 instructs the IVR system 114, 214 (or alternate interface) to play an announcement (or provide another indication) confirming activation of the Remote Caller Profile service.

In step 630, the IVR system 114, 214 (or alternate interface element) plays the confirmation announcement (or otherwise displays an equivalent confirmation). In step 632, the subscriber ends the call to the IVR system (or otherwise concludes the administration session). The method ends in step 634.

The present application relates to telecommunications systems, including multimedia telecommunications systems, which may be implemented using a variety of electronic and optical technologies, including but not limited to: analog electronic systems; digital electronic systems; microprocessors and other processing elements; and software and other embodied collections of steps, instructions, and the like, for implementing methods, processes, or policies in conjunction with such systems and processing elements. The embodiments described herein are exemplary. Thus it will be appreciated that although the embodiments are described in terms of specific technologies, other equivalent technologies could be used to implement systems in keeping with the spirit of the present invention.

The above-described embodiment of the invention is merely one example of a way in which the invention may be carried out. Other ways may also be possible within the scope of the following claims defining the invention.

## Claims

1. A system (100, 200) for providing a remote caller profile service whereby caller profile information associated with a caller profile subscriber may be delivered to a called party terminal (124, 224) for a call executed by the caller profile subscriber, **characterized in that** the call may be executed from a remote terminal (120, 220) other than the one to which the caller subscribes, the system comprising:
a telecommunications switching system (118, 122, 218, 222) coupled to said remote terminal and said called party terminal;
a caller profile database server (110, 210) coupled to said telecommunications switching system and adapted to store caller profile information for said caller profile subscriber;
a caller profile administrative server (112, 212) coupled to said caller profile database server, said caller profile administrative server being adapted to administer said caller profile information responsive to instructions from said caller profile subscriber; and
an interactive voice response system (114, 214) coupled to said caller profile administrative server, said interactive voice response system comprising a user interface adapted to receive a request from the caller profile subscriber to invoke the caller profile service from the remote terminal and, responsive to the request, initiate caller profile service for said subscriber for a subsequent call from the remote terminal.

2. The system of claim 1 wherein said caller profile database server is adapted to store a plurality of caller profiles for said caller profile subscriber;
said interactive voice response system being adapted to receive from said caller profile subscriber instructions defining which of said plurality of caller profiles shall be delivered for said subsequent call from the remote terminal.

3. The system of claim 2 wherein said caller profile database server is adapted to implement said instructions defining which of said plurality of caller profiles shall be delivered for said subsequent call from the remote terminal.

4. A method for providing remote activation of a caller profile service **characterized in that** remote activation occurs from a remote terminal other than the one to which the caller subscribes in a telecommunications system (100, 200) having an interactive voice response system (114, 214) coupled to a caller profile administrative system (112, 212), the method comprising the steps of:
(a) receiving, by the interactive voice response system, a request from a calling party to invoke the caller profile service from the remote terminal;
(b) determining whether the calling party subscribes to the caller profile service;
(c) responsive to a positive determination that said calling party subscribes to the caller profile service, the calling party thereby defining a caller profile subscriber, requesting from said caller profile database server caller profile information associated with said caller profile subscriber; and
(d) delivering the caller profile information to a called party terminal for a subsequent call from the remote terminal to the called party terminal.

5. The method of claim 4 wherein step (b) comprises the interactive voice response system performing steps of:
receiving authentication information from the calling party;
sending the authentication information to the caller profile database server; and
receiving from the caller profile database server, based on validity of the authentication information, an instruction to play one of: a service denial announcement and a confirmation announcement to the calling party.

6. The method of claim 4, wherein step (b) comprises the caller profile database server performing steps of:
receiving authentication information from the interactive voice response system, the authentication information having been obtained by the interactive voice system from the calling party;
determining validity of the authentication information; and
instructing the interactive voice response system, based on validity of the authentication information, to play one of: a service denial announcement and a confirmation announcement to the calling party.

## Patentansprüche

1. System (100, 200) zum Bereitstellen eines Profildienstes eines entfernten Anrufers, wobei einem Anruferprofil-Teilnehmer zugeordnete Anruferprofilinformationen für eine vom Anruferprofil-Teilnehmer ausgeführte Verbindung an ein Endgerät (124, 224) eines gerufenen Teilnehmers abgegeben werden können, **dadurch gekennzeichnet, daß** die Verbindung von einem anderen entfernten Endgerät (120, 220) als dem, das der Anrufer abonniert, ausgeführt werden kann, mit folgendem:
einem an das entfernte Endgerät und das Endgerät des gerufenen Teilnehmers angekoppelten Telekommunikationsvermittlungssystem (118, 122, 218, 222);
einem an das Telekommunikationsvermittlungssystem angekoppelten Anruferprofildatenbankserver (110, 210) zum Speichern von Anruferprofilinformationen für den Anruferprofil-Teilnehmer;
einem an den Anruferprofildatenbankserver angekoppelten Anruferprofilverwaltungsserver (112, 212) zur Verwaltung der Anruferprofilinformationen als Reaktion auf Anweisungen von dem Anruferprofil-Teilnehmer; und
einem an den Anruferprofilverwaltungsserver angekoppelten interaktiven Sprachausgabesystem (114, 214) mit einer Benutzerschnittstelle zum Empfangen einer Anforderung von dem Anruferprofil-Teilnehmer zum Aufrufen des Anruferprofildienstes von dem entfernten Endgerät und als Reaktion auf die Anforderung Einleiten des Anruferprofildienstes für diesen Teilnehmer für eine nachfolgende Verbindung vom entfernten Endgerät.

2. System nach Anspruch 1, wobei der Anruferprofildatenbankserver zum Speichern einer Mehrzahl von Anruferprofilen für den Anruferprofil-Teilnehmer angeordnet ist;
wobei das interaktive Sprachausgabesystem für den Empfang von Anweisungen, welches der Mehrzahl von Anruferprofilen für die nachfolgende Verbindung von dem entfernten Endgerät abgegeben werden soll, von dem Anruferprofil-Teilnehmer angeordnet ist.

3. System nach Anspruch 2, wobei der Anruferprofildatenbankserver zum Implementieren dieser Anweisungen, die definieren, welches der Mehrzahl von Anruferprofilen für die nachfolgende Verbindung von dem entfernten Endgerät abzugeben ist, angeordnet ist.

4. Verfahren zum Bereitstellen einer Fernaktivierung eines Anruferprofildienstes, **dadurch gekennzeichnet, daß** Fernaktivierung von einem anderen entfernten Endgerät aus als dem stattfindet, das der Anrufer abonniert, in einem Telekommunikationssystem (100, 200) mit einem an ein Anruferprofilverwaltungssystem (112, 212) angekoppelten interaktiven Sprachausgabesystem (114, 214), mit folgenden Schritten:
(a) Empfangen durch das interaktive Sprachausgabesystem einer Anforderung von einem anrufenden Teilnehmer zum Aufrufen des Anruferprofildienstes vom entfernten Endgerät;
(b) Bestimmen, ob der anrufende Teilnehmer den Anruferprofildienst abonniert;
(c) als Reaktion auf eine positive Bestimmung, daß der anrufende Teilnehmer den Anruferprofildienst abonniert, Definieren eines Anruferprofil-Teilnehmers dadurch durch den anrufenden Teilnehmer, der von dem Anruferprofildatenbankserver dem Anruferprofil-Teilnehmer zugeordnete Anruferprofilinformationen anfordert; und
(d) Abgeben der Anruferprofilinformationen an ein Endgerät eines gerufenen Teilnehmers für eine nachfolgende Verbindung vom entfernten Endgerät zu dem Endgerät des gerufenen Teilnehmers.

5. Verfahren nach Anspruch 4, wobei der Schritt (b) umfaßt, daß das interaktive Sprachausgabesystem folgende Schritte durchführt;
Empfangen von Authentifizierungsinformationen vom rufenden Teilnehmer;
Senden der Authentifizierungsinformationen zum Anruferprofildatenbankserver; und
Empfangen vom Anruferprofildatenbankserver auf Grundlage der Gültigkeit der Authentifizierungsinformationen einer Anweisung, eine der folgenden abzuspielen: eine Dienstverweigerungsansage und eine Bestätigungsansage an den rufenden Teilnehmer.

6. Verfahren nach Anspruch 4, wobei Schritt (b) umfaßt, daß der Anruferprofildatenbankserver folgende Schritte durchführt:
Empfangen von Authentifizierungsinformationen vom interaktiven Sprachausgabesystem, wobei die Authentifizierungsinformationen durch das interaktive Sprachsystem vom rufenden Teilnehmer erhalten worden sind;
Bestimmen der Gültigkeit der Authentifizierungsinformationen; und
Anweisen des interaktiven Sprachausgabesystems auf Grundlage der Gültigkeit der Authentifizierungsinformationen, eine der folgenden abzuspielen: eine Dienstverweigerungsansage und eine Bestätigungsansage an den rufenden Teilnehmer.

## Revendications

1. Système (100, 200) pour fournir un service de profil d'appelant distant par lequel des informations de profil d'appelant associées à un abonné au profil d'appelant peuvent être fournies à un terminal d'appelé (124, 224) pour un appel exécuté par l'abonné au profil d'appelant, **caractérisé en ce que** l'appel peut être exécuté à partir d'un terminal distant (120, 220) autre que celui auquel l'appelant est abonné, le système comprenant :
un système de commutation de télécommunications (118, 122, 218, 222) couplé audit terminal distant et audit terminal d'appelé ;
un serveur de base de données de profils d'appelant (110, 210) couplé audit système de commutation de télécommunications et adapté pour mémoriser des informations de profils d'appelant pour ledit abonné au profil d'appelant ;
un serveur administratif de profils d'appelant (112, 212) couplé audit serveur de base de données de profils d'appelant, ledit serveur administratif de profils d'appelant étant adapté pour administrer lesdites informations de profils d'appelant en réponse à des instructions dudit abonné au profil d'appelant ; et
un système de réponse vocale interactif (114, 214) couplé audit serveur administratif de profils d'appelant, ledit système de réponse vocale interactif comprenant une interface utilisateur adaptée pour recevoir de l'abonné au profil d'appelant une demande sollicitant le service de profil d'appelant à partir du terminal distant et, en réponse à la demande, lancer le service de profil d'appelant pour ledit abonné pour un appel ultérieur à partir du terminal distant.

2. Système selon la revendication 1, dans lequel ledit serveur de base de données de profils d'appelant est adapté pour mémoriser une pluralité de profils d'appelant pour ledit abonné au profil d'appelant ;
ledit système de réponse vocal interactif étant adapté pour recevoir dudit abonné au profil d'appelant des instructions définissant celui de ladite pluralité de profils d'appelant qui sera fourni pour ledit appel ultérieur à partir du terminal distant.

3. Système selon la revendication 2, dans lequel ledit serveur de base de données de profils d'appelant est adapté pour mettre en oeuvre lesdites instructions définissant celui de ladite pluralité de profils d'appelant qui sera fourni pour ledit appel ultérieur à partir du terminal distant.

4. Procédé pour assurer l'activation à distance d'un service de profil d'appelant, **caractérisé en ce que** l'activation à distance intervient à partir d'un terminal distant autre que celui auquel l'appelant est abonné dans un système de télécommunications (100, 200) ayant un système de réponse vocale interactif (114, 214) couplé à un système administratif de profils d'appelant (112, 212), le procédé comprenant les étapes de :
(a) réception, par le système de réponse vocal interactif, d'une demande par un appelant sollicitant le service de profil d'appelant à partir du terminal distant ;
(b) détermination si l'appelant souscrit au service de profil d'appelant ;
(c) en réponse à une détermination positive que ledit appelant souscrit au service de profil d'appelant, l'appelant définissant ainsi un abonné au profil d'appelant, demande par ledit serveur de base de données de profils d'appelant d'informations de profil d'appelant associées audit abonné au profil d'appelant ; et
(d) fourniture des informations de profil d'appelant à un terminal d'appelé pour un appel ultérieur par le terminal distant dudit terminal d'appelé.

5. Procédé selon la revendication 4, dans lequel l'étape (b) comprend l'exécution par le système de réponse vocale interactif des étapes :
de réception d'informations d'authentification à partir de l'appelant ;
d'envoi des informations d'authentification au serveur de base de données de profils d'appelant ; et
de réception à partir du serveur de base de données de profils d'appelant, en fonction de la validité des informations d'authentification, d'une instruction de lecture à l'appelant de l'une : d'une annonce de refus de service et d'une annonce de confirmation de service.

6. Procédé selon la revendication 4, dans lequel l'étape (b) comprend l'exécution par le serveur de base de données de profils d'appelant des étapes :
de réception d'informations d'authentification à partir du système de réponse vocale interactif, les informations d'authentification ayant été obtenues par le système vocal interactif à partir de l'appelant ;
de détermination de la validité des informations d'authentification ; et
d'instruction du système de réponse vocale interactif, en fonction de la validité des informations d'authentification, pour qu'il lise à l'appelant l'une : d'une annonce de refus de service et d'une annonce de confirmation de service.
